# EUROPEAN PATENT APPLICATION

(11) **EP 3 252 863 A1**
(43) Date of publication of application: **06.12.2017**
(21) Application number: 16743114.7
(22) Date of filing: 14.01.2016
(51) Int. Cl.: H01M 10/08, H01M 4/14, H01M 4/62

(54) **LEAD STORAGE CELL AND AUTOMOBILE PROVIDED WITH SAME**

(30) Priority: 28.01.2015 JP 2015014071
(71) Applicant: Hitachi Chemical Co., Ltd., Chiyoda-ku Tokyo 100-6606 (JP)
(72) Inventor: MARUYAMA Kazuya, Tokyo 100-6606 (JP); KOBAYASHI Shinsuke, Tokyo 100-6606 (JP)
(74) Representative: Hoffmann Eitle
(86) International application number: PCT/JP2016/051002
(87) International publication number: WO 2016/121510

(57) **Abstract**

The present invention provides a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contains at least one selected from the group consisting of a potassium ion, an aluminum ion, a cesium ion and a phosphate ion.

## Description

### Technical Field

The present invention relates to a lead storage battery and an automobile provided with the same.

### Background Art

As one of efforts to prevent global warming, regulations on CO₂ emissions from automobiles and regulations on fuel efficiency are being strengthened in each country. From such a situation, it becomes an urgent task for the automobile industry to develop next-generation environmental automobiles that reduce an amount of CO₂ emission. An idling stop vehicle (hereinafter referred to as "ISS vehicle") in the next-generation environmental automobiles has such advantages as to be inexpensive without largely changing an existing design, and to be capable of enhancing fuel efficiency.

The function of enhancing the fuel efficiency of the ISS vehicle has two main features. One is a feature of converting kinetic energy into electric energy at the time of brake braking, storing the electric energy in a lead storage battery, and utilizing the stored electric energy (specifically, utilization of regenerated energy). The other one is a feature of turning the engine off while the automobile stops and thereby controlling the engine not to consume excess energy.

In recent years, the number of automobiles is rapidly increasing that do not start the engine for a long period of time, due to an increase of overseas transportation of the automobiles, which requires a long period of time, an increase of drivers who do not drive an automobile except some days, and the like. In addition, there are many lead storage batteries mounted on the automobiles that flow a minute electric current (for instance, electric current of 20 to 100 mA) which is referred to as "dark current" (hereinafter referred to as "dark current discharge"), and become a state of discharge, in order to backup electrical components and keep a control computer even after the engine has stopped. In such a lead storage battery, when the engine is not started for a long period of time, the battery is not charged, the discharge state continues for a long period of time due to the dark current, (which will be hereinafter referred to as "dark current discharge state"), and SOC (State Of Charge) lowers.

It is being understood that when the automobile is left for a long period of time in a state in which the SOC is in a low state to some extent, it is impossible to effectively use the lead storage battery, as in a case in which the driver cannot start the engine. In order to solve such a problem, for instance, in the following Patent Literature 1, such a technology is disclosed as to adjust an area of the opening in a positive electrode grid, which is opened in an approximately rhombic shape, and an amount of DBP (dibutyl phthalate) oil absorbed in carbon black.

### Citation List

### Patent Literature

[Patent Literature 1] International Publication No. WO 2013/073091

### Summary of Invention

### Technical Problem

Incidentally, as a result of an extensive investigation by the present inventors, it has been found that when the SOC of the lead storage battery lowers due to such a situation that the dark current discharge state continues for a long period of time, the charging performance of the lead storage battery remarkably lowers. In addition, the lead storage battery is required to suppress an excessive voltage drop in the dark current discharge state.

The present invention is designed with respect to the above described circumstances, and an object is to provide a lead storage battery which can suppress the excessive voltage drop in the dark current discharge state, and has excellent charging performance even when SOC has lowered due to the dark current discharge, and to provide an automobile provided with the lead storage battery.

### Solution to Problem

As a result of an extensive investigation, the present inventors have found out that the problem can be solved by using an electrolytic solution which contains at least one selected from the group consisting of a potassium ion, an aluminum ion, a cesium ion and a phosphate ion, in the lead storage battery.

Specifically, a first aspect of the present invention is a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contain potassium ions.

A second aspect of the present invention is a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contains aluminum ions.

A third aspect of the present invention is a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contains cesium ions.

A fourth aspect of the present invention is a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contains phosphate ions.

The lead storage battery according to the present invention can suppress the excessive voltage drop in the dark current discharge state, and has excellent charging performance even when SOC has lowered due to the dark current discharge (charging performance after dark current discharge). In addition, the lead storage battery according to the present invention has excellent charging performance even in an initial state (initial charging performance).

The details of the reasons are not clear why the charging performance of the lead storage battery lowers when the SOC has lowered due to the dark current discharge and why the lead storage battery in the present invention can suppress such a lowering of the charging performance, but the present inventors assume the reasons as in the following way. Specifically, in the dark current discharge state, the rate of generation of lead sulfate is slow, which is a discharge product, and when the lead storage battery is left in the dark current discharge state for a long period of time, the dissolution and the coalescence of the lead sulfate occur. As a result, the lead sulfate particles agglomerate and become coarse, and the charging performance lowers. In contrast to this, in the lead storage battery according to the present invention, specific ions (at least one selected from group consisting of the potassium ion, the aluminum ion, the cesium ion and the phosphate ion) contained in the electrolytic solution suppress the agglomeration and coarsening of the lead sulfate particles, which occur because of the dark current discharge, and accordingly the generation of sulfate ions on the reaction interface of the negative electrode is promoted at the time of charging. Thereby, the lead storage battery according to the present invention has excellent charging performance, even when the SOC has lowered due to the dark current discharge.

It is preferable that the concentration of the potassium ions in the electrolytic solution is 0.003 to 0.15 mol/L. In this case, the charging performance after the dark current discharge and the initial charging performance can be further improved.

It is preferable that the concentration of the aluminum ions in the electrolytic solution is 0.005 to 0.4 mol/L. In this case, the charging performance after the dark current discharge and the initial charging performance can be further improved.

It is preferable that the concentration of the cesium ions in the electrolytic solution is 0.005 to 0.4 mol/L. In this case, the charging performance after the dark current discharge and the initial charging performance can be further improved.

It is preferable that the electrolytic solution further contains the phosphate ions, in addition to at least one selected from the group consisting of the potassium ion, the aluminum ion and the cesium ion. In this case, the charging performance after the dark current discharge and the initial charging performance can be further improved.

It is preferable that the concentration of the phosphate ions in the electrolytic solution is 0.005 to 0.2 mol/L. In this case, the charging performance after the dark current discharge and the initial charging performance can be further improved.

It is preferable that the above described negative electrode material further contains carbon black. In this case, the charging performance after the dark current discharge can be further improved.

It is preferable that the above described negative electrode material further contains a resin having at least one selected from the group consisting of a sulfone group and a sulfonate group. In this case, low-temperature high-rate discharge performance can be further improved.

It is preferable that the above described resin includes at least one selected from the group consisting of: a bisphenol-based resin having at least one selected from the group consisting of a sulfone group and a sulfonate group; lignin sulfonic acid; and a lignin sulfonate. In this case, charge acceptability can be further improved.

It is preferable that the above described resin includes a bisphenol-based resin having at least one selected from the group consisting of the sulfone group and the sulfonate group. In this case, charge acceptability can be further improved.

It is preferable that the above described bisphenol-based resin is a resin derived from a reaction of: a bisphenol-based compound; at least one selected from the group consisting of aminoalkylsulfonic acid, an aminoalkylsulfonic acid derivative, aminoarylsulfonic acid and an aminoarylsulfonic acid derivative; and at least one selected from the group consisting of formaldehyde and a formaldehyde derivative. In this case, charge acceptability can be further improved.

It is preferable that a specific surface area of the above described negative electrode material is 0.5 to 2 m²/g. In this case, the charging performance after the dark current discharge can be further improved.

It is preferable that the specific surface area of the above described positive electrode material is 4 m²/g or larger. In this case, reactivity between the electrolytic solution and the positive electrode active material can be further enhanced.

It is preferable that the above described separator contain a polyolefin and silica. In this case, an effect of suppressing a short circuit can be excellent.

It is preferable that the total of the masses of oxygen and silicon in the above described separator is 30 to 80 mass%, based on the total of masses of carbon, oxygen and silicon, in elemental analysis according to energy dispersive X-ray spectrometry. In this case, the effect of suppressing the short circuit can be excellent and the strength of the separator can be enhanced.

Such a mode is preferable that the above described separator has a convex rib and a base portion which supports the rib, and H/T is 2 or more, which is a ratio of a height H of the above described rib to a thickness T of the base portion. In this case, oxidation resistance of the separator can be excellent.

A fifth aspect of the present invention is an automobile provided with the above described lead storage battery according to the present invention, wherein the lead storage battery discharges electricity with a current value of 20 to 100 mA in an engine stopped state.

### Advantageous Effects of Invention

The present invention can provide a lead storage battery which can suppress an excessive voltage drop in a dark current discharge state, and also is excellent in charging performance even when SOC has lowered due to a dark current discharge; and an automobile which is provided with the lead storage battery.

The present invention can provide an application of the lead storage battery to an automobile which is charged by an alternator after having been left in the dark current discharge state for a long period of time. The present invention can provide an application of the lead storage battery to an automobile in which the discharge of a minute electric current occurs (for instance, electric current having current value of 20 to 100 mA in engine stopped state). In addition, the present invention can provide an application of the lead storage battery to an automobile which is charged by an alternator in a partially charged state (PSOC: partial state of charge) after having been intermittently charged. The present invention can provide an application of the lead storage battery to a micro hybrid vehicle. The present invention can provide an application of the lead storage battery to an ISS vehicle.

### Brief Description of Drawings

[Figure 1] Figure 1 is a view showing a separator.
[Figure 2] Figure 2 is a cross-sectional view of the separator and electrodes.
[Figure 3] Figure 3 is a view showing a bag-like separator and an electrode to be accommodated in the bag-like separator.

### Description of Embodiments

Embodiments of the present invention will be described in detail below. Incidentally, the specific gravity varies depending on a temperature, and accordingly is defined as a specific gravity which is converted to that at 20°C, in the present specification.

### <lead storage battery>

The lead storage battery according to the present embodiment is provided with, for instance, a battery case, an electrode (electrode plate or the like), an electrolytic solution (diluted sulfuric acid or the like) and a separator. The electrode and the electrolytic solution are accommodated in the battery case. The electrode has a positive electrode (positive electrode plate or the like) and a negative electrode (negative electrode plate or the like) which face each other through the separator. Examples of the lead storage battery according to the present embodiment include a liquid type lead storage battery, and a control valve type lead storage battery; and the liquid type lead storage battery is preferable.

The positive electrode and the negative electrode, for instance, are stacked in layers through the separator to form an electrode group (polar plate group or the like). The positive electrode has a current collector (positive electrode current collector) and a positive electrode material that is held by the current collector. The negative electrode has a current collector (negative electrode current collector) and a negative electrode material that is held by the current collector. In the present embodiment, the positive electrode material and the negative electrode material are, for instance, electrode materials which have been already subjected to formation (for instance, to fully charged state). When the electrode materials are unformed, the electrode materials (unformed positive electrode material and unformed negative electrode material) contain their own respective raw materials and the like. The current collector constitutes an electrically-conducting path of the electric current to be passed from the electrode material. In the present embodiment, the electrolytic solution contains at least one selected from the group consisting of the potassium ion, the aluminum ion, the cesium ion and the phosphate ion. As for a basic structure of the lead storage battery, a similar structure to that of a conventional lead storage battery can be used.

Up to now, in the lead storage battery, on the purpose of enhancing the charging performance, it has been investigated how to improve the initial charging performance and the charging performance after cycles. However, as a result of the extensive investigation of the present inventors, it has become clear that the charging performance greatly lowers due to the dark current discharge, and it is necessary in the lead storage battery to improve also the charging performance after the dark current discharge, together with the initial charging performance. In addition, the lead storage battery is required also to suppress an excessive voltage drop in the dark current discharge state. In response to this, the lead storage battery according to the present embodiment can suppress the lowering of the charging performance due to the dark current discharge, while suppressing the excessive voltage drop in the dark current discharge state; and along with being capable of suppressing the excessive voltage drop in the dark current discharge state, can obtain excellent charging performance even when SOC has lowered due to the dark current discharge. In addition, the lead storage battery according to the present embodiment can improve also the charging performance after the dark current discharge, together with the initial charging performance.

The lead storage battery according to the present embodiment is useful as a lead storage battery which is charged by an alternator after having been left in the dark current state for a long period of time. The lead storage battery according to the present embodiment is useful, for instance, as a lead storage battery which discharges electricity with a minute electric current (for instance, electric current having current value of 20 to 100 mA in engine stopped state). In addition, the lead storage battery according to the present embodiment is useful as a lead storage battery which is discharged by an alternator in a partial charged state (PSOC) after having been intermittently charged. The lead storage battery according to the present embodiment is suitably used in automobiles (ISS vehicle, micro hybrid vehicle and the like) which are provided with these lead storage batteries, respectively. Incidentally, the minute electric current discharge in the engine stopped state in the lead storage battery which is mounted on the automobile can be measured by using, for instance, a clamp meter or the like.

### (Positive electrode material)

### [Positive electrode active material]

The positive electrode material contains a positive electrode active material. The positive electrode active material can be obtained by aging and drying a positive electrode material paste containing a raw material of the positive electrode active material to obtain an unformed positive electrode active material, and then forming the unformed positive electrode active material. It is preferable that the positive electrode active material after the formation contains a β-lead dioxide (β-PbO₂), and the positive electrode active material after the formation may further contain an α-lead dioxide (α-PbO₂). The raw material of the positive electrode active material is not limited in particular, and examples of the raw materials include lead powder. Examples of the lead powder include lead powder which is produced by the ball mill type lead powder producing machine or a Burton-pot type lead powder producing machine (mixture of main component PbO powder and scaly metallic lead, in ball mill type lead powder producing machine). Red lead (Pb₃O₄) may be used as the raw material of the positive electrode active material. It is preferable that the unformed positive electrode material contains an unformed positive electrode active material containing a tribasic lead sulfate as a main component.

It is preferable for an average particle size of the positive electrode active material to be 0.3 µm or larger, is more preferable to be 0.5 µm or larger, and is further preferable to be 0.7 µm or larger, from the viewpoints that the charging performance after the dark current discharge and the initial charging performance further improve, and that the cycle characteristics further improve. It is preferable for the average particle size of the positive electrode active material to be 2.5 µm or smaller, is more preferable to be 2 µm or smaller, and is further preferable to be 1.5 µm or smaller, from the viewpoint that the cycle characteristics further improve. The above described average particle size of the positive electrode active material is an average particle size of a positive electrode active material in the positive electrode material after the formation. The average particle size of the positive electrode active material can be obtained, for instance, as a numerical value which is obtained by arithmetically averaging the values of long-side lengths (maximum particle sizes) of all the positive electrode active material particles in a range of 10 µm in length × 10 µm in width, in an image of a scanning electron microscopic photograph (1000 times) for the positive electrode material in the central portion of the positive electrode after the formation.

It is preferable for the content of the positive electrode active material to be 95 mass% or more, is more preferable to be 97 mass% or more, and is further preferable to be 99 mass% or more, based on the total mass of the positive electrode material, from the viewpoint of further being excellent in battery characteristics (capacity, low-temperature high-rate discharge performance, charge acceptability, cycle characteristics and the like). The upper limit of the content of the positive electrode active material may be 100 mass% or less. The above described content of the positive electrode active material is a content of a positive electrode active material in the positive electrode material after the formation.

### [Positive electrode additive]

The positive electrode material may further contain an additive. Examples of the additives include a carbon material (carbonaceous conductive material excluding carbon fiber), and short fiber for reinforcement. Examples of the carbon materials include carbon black and graphite. Examples of the carbon black include Furnace black (Ketjen Black (registered trademark, hereinafter the same)), Channel Black, Acetylene black and Thermal black. Examples of the short fibers for reinforcement include acrylic fiber, polyethylene fiber, polypropylene fiber, polyethylene terephthalate fiber and carbon fiber.

### [Physical property of positive electrode material]

It is preferable for the specific surface area of the positive electrode material to be 2 m²/g or larger, is more preferable to be 3 m²/g or larger, and is further preferable to be 4 m²/g or larger, from the viewpoint of enhancing the reactivity between the electrolyte solution and the positive electrode active material. The above described specific surface area of the positive electrode material may be 5 m²/g or larger, and may also be 6 m²/g or larger. It is preferable for the specific surface area of the positive electrode material to be 12 m²/g or smaller, is more preferable to be 11 m²/g or smaller, and is further preferable to be 10 m²/g or smaller, from the viewpoint of being excellent in a utilization factor. The above described specific surface area of the positive electrode material may be 8 m²/g or smaller. From these viewpoints, it is preferable for the above described specific surface area of the positive electrode material to be 2 to 12 m²/g, is more preferable to be 3 to 11 m²/g, and is further preferable to be 4 to 10 m²/g. The above described specific surface area of the positive electrode material may be 5 to 8 m²/g and may also be 6 to 8 m²/g. The above described specific surface area of the positive electrode material is a specific surface area of the positive electrode material after the formation. The specific surface area of the positive electrode material can be adjusted, for instance, by a method of adjusting an amount of dilute sulfuric acid and water to be added when the positive electrode material paste is prepared, a method of refining the active material at such a stage that the positive electrode active material is unformed, a method of changing the condition of the formation, and the like.

The specific surface area of the positive electrode material can be measured, for instance, by a BET method. The BET method is a method of making the surface of a measurement sample adsorb an inert gas of which one molecule size is known (for instance, nitrogen gas), and determining the surface area from the adsorption amount and the occupying area of the inert gas; and is a general measurement method of the specific surface area.

### (Negative electrode material)

### [Negative electrode active material]

The negative electrode material contains the negative electrode active material. The negative electrode active material can be obtained by aging and drying a negative electrode material paste containing a raw material of the negative electrode active material to obtain an unformed negative electrode active material, and then forming the unformed negative electrode active material. Examples of the negative electrode active materials after the formation include spongy lead (Spongy lead). The above described spongy lead tends to react with dilute sulfuric acid in the electrolytic solution and gradually turn into lead sulfate (PbSO₄). The raw materials of the negative electrode active material include lead powder. Examples of the lead powder include lead powder which is produced by the ball mill type lead powder producing machine or a Burton-pot type lead powder producing machine (mixture of main component PbO powder and scaly metallic lead, in ball mill type lead powder producing machine). The unformed negative electrode active material is composed of, for instance, basic lead sulfate, metal lead and a low-grade oxide.

It is preferable for the average particle size of the negative electrode active material to be 0.3 µm or larger, is more preferable to be 0.5 µm or larger, and is further preferable to be 0.7 µm or larger, from the viewpoint that the cycle characteristics further improve. It is preferable for the average particle size of the negative electrode active material to be 2.5 µm or smaller, is more preferable to be 2 µm or smaller, and is further preferable to be 1.5 µm or smaller, from the viewpoint that the cycle characteristics further improve. The above described average particle size of the negative electrode active material is an average particle size of a negative electrode active material in the negative electrode material after the formation. The average particle size of the negative electrode active material can be obtained, for instance, as a numerical value which is obtained by arithmetically averaging the values of long-side lengths (maximum particle sizes) of all the negative electrode active material particles, in a range of 10 µm in length × 10 µm in width, in an image of a scanning electron microscopic photograph (1000 times) for the negative electrode material in the central portion of the negative electrode after the formation.

It is preferable for the content of the negative electrode active material to be 93 mass% or more, is more preferable to be 95 mass% or more, and is further preferable to be 98 mass% or more, based on the total mass of the negative electrode material, from the viewpoint of further being excellent in battery characteristics (capacity, low-temperature high-rate discharge performance, charge acceptability, cycle characteristics and the like). The upper limit of the content of the negative electrode active material may be 100 mass% or less. The above described content of the negative electrode active material is a content of a negative electrode active material in the negative electrode material after the formation.

### [Negative electrode additive]

The negative electrode material may further contain an additive. Examples of additives include: barium sulfate; a carbon material (carbonaceous conductive material excluding carbon fiber); short fiber for reinforcement; and a resin (resin having sulfone group and/or sulfonate group) which has at least one selected from the group consisting of a sulfone group (sulfonic acid group and sulfo group) and a sulfonate group (that is group in which hydrogen of sulfone group is substituted with alkali metal, and the like). The negative electrode material contains the resin having at least one selected from the group consisting of the sulfone group and the sulfonate group, and thereby the low-temperature high-rate discharge performance can be further improved.

Examples of the carbon materials include carbon black and graphite. The carbon black is preferable as the carbon material, from the viewpoint that charge characteristics after the dark current discharge further improve. Examples of the carbon black include Furnace black (Ketjen Black, and the like), Channel black, Acetylene black and Thermal black. Among the carbon blacks, the Furnace black is preferable that is produced by a furnace method. Examples of the short fibers for reinforcement include acrylic fiber, polyethylene fiber, polypropylene fiber, polyethylene terephthalate fiber and carbon fiber.

When the carbon black is used as the additive, it is preferable for the average particle size of the carbon black to be 10 nm or larger, is more preferable to be 20 nm or larger, and is further preferable to be 25 nm or larger, from the viewpoint of being excellent in handling properties. It is preferable for the average particle size of the carbon black to be 100 nm or smaller, is more preferable to be 50 nm or smaller, and is further preferable to be 40 nm or smaller, from the viewpoint that the charging performance after the dark current discharge and the initial charging performance further improve. From these viewpoints, it is preferable for the average particle size of the carbon black to be 10 to 100 nm, is more preferable to be 20 to 50 nm, and is further preferable to be 25 to 40 nm. When the average particle size of the carbon black is 100 nm or smaller, the specific surface area of the whole carbon black is large, and accordingly conductivity among the active materials improves; and accordingly it is assumed that the charging performance after the dark current discharge and the initial charging performance further improve. The average particle size of the carbon black can be obtained, for instance, as a numerical value which is obtained by vapor-depositing the particles of the carbon black onto a substrate, and then arithmetically averaging the values of long-side lengths (maximum particle sizes) of all the particles in a range of 100 µm in length × 100 µm in width, in an image of a scanning electron microscopic photograph for the central portion of the above described substrate. Incidentally, when the average particle size is small (when average particle size can be anticipated to be 0.1 µm or smaller), the average particle size can be obtained as a numerical value which is obtained by arithmetically averaging the values of long-side lengths of all the particles in a range of 1 µm in length × 1 µm in width, in an image of a scanning electron microscopic photograph. In addition, as for a method of automatically determining the average particle size, an image analysis software for a two-dimensional image (particle analysis Ver. 3.5 made by NIPPON STEEL & SUMIKIN

### TECHNOLOGY Co., Ltd.) can be also used.

When graphite is used as the additive, it is preferable that the average particle size of the graphite is as small as possible. It is preferable for the average particle size of the graphite to be 1 µm or larger, is more preferable to be 10 µm or larger, and is further preferable to be 20 µm or larger, from the viewpoint of practical use. It is preferable for the average particle size of the graphite to be 500 µm or smaller, is more preferable to be 100 µm or smaller, and is further preferable to be 50 µm or smaller, from the viewpoint that the charging performance after the dark current discharge and the initial charging performance further improve. From these viewpoints, it is preferable for the average particle size of the graphite to be 1 to 500 µm, is more preferable to be 1 to 100 µm, and is further preferable to be 1 to 50 µm. The average particle diameter of the graphite may be 10 to 500 µm, and may also be 20 to 500 µm. The average particle size of the graphite can be measured with a similar method to that for the average particle size of the carbon black.

It is preferable for the content of the carbon material to be 0.05 mass% or more, is more preferable to be 0.1 mass% or more, is further preferable to be 0.15 mass% or more, and is particularly preferable to be 0.2 mass% or more, based on the total mass of the negative electrode material, from the viewpoint that the charging performance after the dark current discharge and the initial charging performance further improve. It is preferable for the content of the carbon material to be 3 mass% or less, is more preferable to be 1.4 mass% or less, is further preferable to be 0.5 mass% or less, is particularly preferable to be 0.4 mass% or more, and is extremely preferable to be 0.3 mass% or more, based on the total mass of the negative electrode material, from the viewpoint that the charging performance after the dark current discharge and the initial charging performance further improve. From these viewpoints, it is preferable for the content of the carbon material to be 0.05 to 3 mass%, is more preferable to be 0.1 to 3, is further preferable to be 0.15 to 3 mass%, is particularly preferable to be 0.2 to 1.4 mass%, is extremely preferable to be 0.2 to 0.5 mass%, is very preferable to be 0.2 to 0.4 mass%, and is still further preferable to be 0.2 to 0.3 mass%, based on the total mass of the negative electrode material. The above described content of the carbon material is a content of a carbon material in the negative electrode material after the formation.

Examples of the resins having the sulfone group and/or the sulfonate group include: a bisphenol-based resin having at least one selected from the group consisting of the sulfone group and the sulfonate group (bisphenol resin having sulfone group and/or sulfonate group, hereinafter referred to simply as "bisphenol-based resin"); lignin sulfonic acid; and a lignin sulfonate. The lignin sulfonic acid is a chemical compound in which a part of decomposed products of lignin is sulfonated. Examples of the lignin sulfonates include potassium lignin sulfonate and sodium lignin sulfonate. At least one selected from the group consisting of a bisphenol-based resin, lignin sulfonic acid and a lignin sulfonate, is preferable as the resin having the sulfone group and/or the sulfonate group from the viewpoint that the charge acceptability further improves; and the bisphenol-based resin is more preferable.

It is preferable that the bisphenol-based resin is the resin obtained by making a bisphenol-based compound react with at least one selected from the group consisting of an aminoalkylsulfonic acid, an aminoalkylsulfonic acid derivative, an aminoarylsulfonic acid and an aminoarylsulfonic acid derivative, and at least one selected from the group consisting of formaldehyde and a formaldehyde derivative (which is resin derived from reaction among bisphenol-based compound, at least one selected from the group consisting of aminoalkylsulfonic acid, aminoalkylsulfonic acid derivative, aminoarylsulfonic acid and aminoarylsulfonic acid derivative, and at least one selected from the group consisting of formaldehyde and formaldehyde derivative. condensate and the like.), from the viewpoint that the charge acceptability further improves.

The bisphenol-based compound is a chemical compound having two hydroxyphenyl groups. Examples of the bisphenol-based compound include 2,2-bis(4-hydroxyphenyl)propane (hereinafter referred to as "bisphenol A"), bis(4-hydxoxyphenyl)methane, 1,1-bis(4-hydroxyphenyl)ethane, 2,2-bis(4-hydroxyphenyl)hexafluoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis{4-hydroxyphenyl)-3,3,5-trimethylcyclohexane, and bis(4-hydroxyphenyl)sulfone (hereinafter referred to as "bisphenol S").

Examples of the aminoalkylsulfonic acid include aminomethanesulfonic acid, 2-aminoethanesulfonic acid, 3-aminopropanesulfonic acid and 2-methylaminoethanesulfonic acid. Examples of the aminoalkylsulfonic acid derivative include a chemical compound in which a hydrogen atom of an aminoalkylsulfonic acid is substituted with an alkyl group (for instance, alkyl group having 1 to 5 carbon atoms) or the like, and an alkali metal salt in which a hydrogen atom of a sulfone group (-SO₃H) of an aminoalkylsulfonic acid is substituted with an alkali metal (for instance, sodium or potassium). Examples of the aminoarylsulfonic acid include aminobenzenesulfonic acid (4-aminobenzenesulfonic acid and the like), and aminonaphthalenesulfonic acid. Examples of the aminoarylsulfonic acid derivative include a chemical compound in which a hydrogen atom of aminoarylsulfonic acid is substituted with an alkyl group (for instance, alkyl group having 1 to 5 carbon atoms) or the like, and an alkali metal salt in which a hydrogen atom of a sulfone group (-SO₃H) of aminoarylsulfonic acid is substituted with an alkali metal (for instance, sodium or potassium).

Examples of the formaldehyde derivative include paraformaldehyde, hexamethylenetetramine and trioxane.

It is preferable that the bisphenol-based resin has at least one selected from the group consisting of a structural unit represented by the following formula (I) and a structural unit represented by the following formula (II). 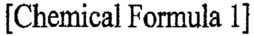 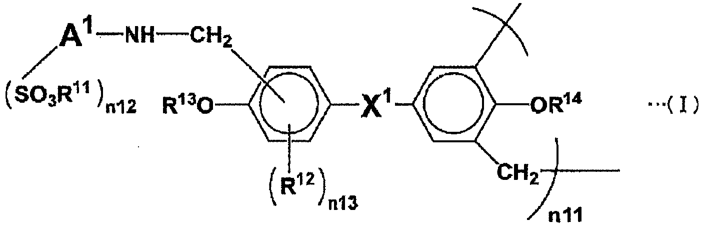 [In the formula (I), X¹ represents a divalent group, A¹ represents an alkylene group having 1 to 4 carbon atoms or an arylene group, R¹¹ represents an alkali metal or a hydrogen atom, R¹² represents a methylol group (-CH₂OH), R¹³ and R¹⁴ each independently represents an alkali metal or a hydrogen atom, n11 represents an integer of 1 to 600, n12 represents an integer of 1 to 3, and n13 represents 0 or 1.] 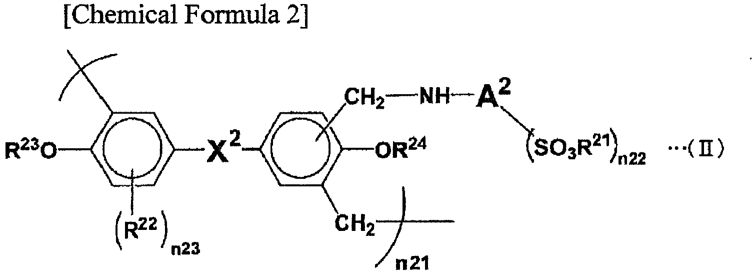 [In the formula (II), X² represents a divalent group, A² represents an alkylene group having 1 to 4 carbon atoms or an arylene group, R²¹ represents an alkali metal or a hydrogen atom, R²² represents a methylol group (-CH₂OH), R²³ and R²⁴ each independently represents an alkali metal or a hydrogen atom, n21 represents an integer of 1 to 600, n22 represents an integer of 1 to 3, and n23 represents 0 or 1.]

A ratio between the structural unit represented by the formula (I) and the structural unit represented by the formula (II) is not limited in particular, and can vary depending on synthetic conditions and the like. A resin that has only either one of the structural unit represented by the formula (I) and the structural unit represented by the formula (II) may be used for the bisphenol-based resin.

Examples of X¹ and X² include an organic group such as an alkylidene group (methylidene group, ethylidene group, isopropylidene group, sec-butylidene group and the like), a cycloalkylidene group (cyclohexylidene group and the like), a phenylalkylidene group (diphenylmethylidene group, phenylethylidene group and the like); and a sulfonyl group. The isopropylidene group (-C(CH₃)₂) is preferable from the viewpoint of being further excellent in the charging performance, and the sulfonyl group (-SO₂-) is preferable from the viewpoint of being further excellent in the discharge characteristics. X¹ and X² may be substituted with a halogen atom such as a fluorine atom. When X¹ and X² are the cycloalkylidene groups, the hydrocarbon ring may be substituted with an alkyl group or the like.

Examples of A¹ and A² include an alkylene group having 1 to 4 carbon atoms such as a methylene group, an ethylene group, a propylene group and a butylene group; and a divalent arylene group such as a phenylene group and a naphthylene group. The above described arylene group may be substituted with an alkyl group or the like.

Examples of alkali metals of R¹¹, R¹³, R¹⁴, R²¹, R²³ and R²⁴ include sodium and potassium. It is preferable that n11 and n21 are each 5 to 300, from the viewpoint of being further excellent in the cycle characteristics and solubility to the solvent. It is preferable for n12 and n22 to be 1 or 2, and is more preferable to be 1, from the viewpoint that charging performance, discharge characteristics and cycle characteristics improve in a well-balanced manner. It is preferable that n13 and n23 are 0, though the values vary depending on the production conditions, from the viewpoint of being further excellent in the cycle characteristics and excellent also in storage stability of the bisphenol-based resin.

It is preferable for the weight average molecular weight of the resin (bisphenol-based resin and the like) having the sulfone group and/or the sulfonate group to be 3000 or more, is more preferable to be 10000 or more, is further preferable to be 20000 or more, and is particularly preferable to be 30000 or more, from the viewpoint of suppressing the elution of the resin having the sulfone group and/or the sulfonate group from the electrode to the electrolytic solution in the lead storage battery to thereby easily improve the cycle characteristics. It is preferable for the weight average molecular weight of the resin having the sulfone group and/or the sulfonate group to be 200000 or less, is more preferable to be 150000 or less, and is further preferable to be 100000 or less, from the viewpoint of suppressing the lowering of adsorbability to an electrode active material and the resultant lowering of dispersibility to thereby easily improve the cycle characteristics.

The weight average molecular weight of the resin having the sulfone group and/or the sulfonate group can be measured, for instance, by gel permeation chromatography (hereinafter referred to as "GPC") on the following conditions.

### (GPC condition)

Apparatus: High performance liquid chromatograph LC-2200 Plus (made by JASCO Corporation)
Pump: PU-2080
Differential refractometer: RI-2031
Detector: Ultraviolet visible absorptiometer UV-2075 (λ: 254 nm)
Column oven: CO-2065
Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/min

Molecular weight standard sample: polyethylene glycol (molecular weight: 1.10 × 10⁶, 5.80 × 10⁵, 2.55 × 10⁵, 1.46 × 10⁵, 1.01 × 10⁵, 4.49 × 10⁴, 2.70 × 10⁴ and 2.10 × 10⁴; made by Tosoh Corporation), Diethylene glycol (molecular weight: 1.06 × 10²; made by KISHIDA CHEMICAL Co., Ltd.), and dibutylhydroxytoluene (molecular weight: 2.20 × 10²; made by KISHIDA CHEMICAL Co., Ltd.)

When the resin having the sulfone group and/or the sulfonate group is used, it is preferable for the content of the resin having the sulfone group and/or the sulfonate group to be 0.01 mass% or more, is more preferable to be 0.05 mass% or more, and is further preferable to be 0.1 mass% or more in terms of a solid content of the resin, based on the total mass of the negative electrode material, from the viewpoint of further being excellent in the discharge characteristics. It is preferable for the content of the resin having the sulfone group and/or the sulfonate group to be 2 mass% or less, is more preferable to be 1 mass% or less, and is further preferable to be 0.5 mass% or less in terms of a solid content of the resin based on the total mass of the negative electrode material, from the viewpoint of being further excellent in the charge acceptability.

### [Physical property of negative electrode material]

It is preferable for the specific surface area of the negative electrode material to be 0.5 m²/g or larger, is more preferable to be 0.55 m²/g or larger, and is further preferable to be 0.6 m²/g or larger, from the viewpoint of enhancing the reactivity between the electrolyte solution and the negative electrode active material. It is preferable for the specific surface area of the negative electrode material to be 2 m²/g or smaller, is more preferable to be 1.2 m²/g or smaller, and is further preferable to be 0.8 m²/g or smaller, from the viewpoint of suppressing the shrinkage of the negative electrode. From these viewpoints, it is preferable for the specific surface area of the negative electrode material to be 0.5 to 2 m²/g, is more preferable to be 0.55 to 1.2 m²/g, and is further preferable to be 0.6 to 0.8 m²/g. The above described specific surface area of the negative electrode material is a specific surface area of the negative electrode material after the formation. The specific surface area of the negative electrode material can be adjusted, for instance, by a method of adjusting an amount of dilute sulfuric acid and water to be added when the negative electrode material paste is prepared, a method of refining the active material at such a stage that the negative electrode active material is unformed, a method of changing the condition of th formation, and the like. The specific surface area of the negative electrode material can be measured, for instance, by the BET method.

### (Current collector)

Examples of the method for manufacturing the current collector include a casting method, an expanding method and a punching method. Examples of the material of the current collector include a lead-calcium-tin-based alloy and a lead-antimony-based alloy. A small amount of selenium, silver, bismuth and the like can be added to these materials. The current collector can be obtained, for instance, by forming these materials into a grid shape or a mesh shape according to the above described manufacturing method. The manufacturing methods or the materials of the current collectors of the positive electrode and the negative electrode may be the same as each other or may be different from each other.

### (Electrolytic solution)

The electrolytic solution of the lead storage battery according to the present embodiment contains at least one selected from the group consisting of the potassium ions, the aluminum ions, the cesium ions and the phosphate ions. When the electrolytic solution contains at least one selected from the group consisting of the potassium ions, the aluminum ions and the cesium ions, it is preferable that the electrolytic solution further contains the phosphate ions. In the case where the electrolytic solution further contains the phosphate ions in addition to the potassium ions, the charging performance after the dark current discharge and the initial charging performance tend to further improve. In the case where the electrolytic solution further contains the phosphate ions in addition to the aluminum ions, the charging performance after the dark current discharge and the initial charging performance tend to further improve. In the case where the electrolytic solution further contains the phosphate ions in addition to the cesium ions, the charging performance after the dark current discharge and the initial charging performance tend to further improve.

In the case where the electrolytic solution contains the potassium ions, it is preferable for the concentration of the potassium ions in the electrolytic solution to be 0.003 mol/L or more, is more preferable to be 0.005 mol/L or more, and is further preferable to be 0.01 mol/L or more, based on the total amount of the electrolytic solution, from the viewpoint that the charging performance after the dark current discharge and the initial charging performance further improve. The above described concentration of the potassium ions may be 0.02 mol/L or more. It is preferable for the concentration of the potassium ions in the electrolytic solution to be 0.15 mol/L or less, is more preferable to be 0.12 mol/L or less, and is further preferable to be 0.1 mol/L or less, based on the total amount of the electrolytic solution, from the viewpoint that the charging performance after the dark current discharge and the initial charging performance further improve. The above described concentration of the potassium ions may be 0.08 mol/L or less, and may also be 0.05 mol/L or less. It is preferable for the concentration of the potassium ions in the electrolytic solution to be 0.003 to 0.15 mol/L, is more preferable to be 0.005 to 0.15 mol/L, is further preferable to be 0.01 to 0.12 mol/L, and is particularly preferable to be 0.01 to 0.1 mol/L, based on the total amount of the electrolytic solution, from the viewpoint that the charging performance after the dark current discharge and the initial charging performance further improve.

In the case where the electrolytic solution contains the aluminum ions, it is preferable for the concentration of the aluminum ions in the electrolytic solution to be 0.005 mol/L or more, is more preferable to be 0.01 mol/L or more, and is further preferable to be 0.04 mol/L or more, based on the total amount of the electrolytic solution, from the viewpoint that the charging performance after the dark current discharge and the initial charging performance further improve. The above described concentration of the aluminum ions may be 0.05 mol/L or more, and may also be 0.1 mol/L or more. It is preferable for the concentration of the aluminum ions in the electrolytic solution to be 0.4 mol/L or less, is more preferable to be 0.3 mol/L or less, and is further preferable to be 0.2 mol/L or less, based on the total amount of the electrolytic solution, from the viewpoint that the charging performance after the dark current discharge and the initial charging performance further improve. The above described concentration of the aluminum ions may be 0.15 mol/L or less. It is preferable for the concentration of the aluminum ions in the electrolytic solution to be 0.005 to 0.4 mol/L, is more preferable to be 0.01 to 0.3 mol/L, and is further preferable to be 0.04 to 0.2 mol/L, based on the total amount of the electrolytic solution, from the viewpoint that the charging performance after the dark current discharge and the initial charging performance further improve.

In the case where the electrolytic solution contains the cesium ions, it is preferable for the concentration of the cesium ions in the electrolytic solution to be 0.005 mol/L or more, is more preferable to be 0.01 mol/L or more, and is further preferable to be 0.04 mol/L or more, based on the total amount of the electrolytic solution, from the viewpoint that charging performance after the dark current discharge and the initial charging performance further improve. The above described concentration of the cesium ions may be 0.1 mol/L or more, and may also be 0.15 mol/L or more. It is preferable for the concentration of the cesium ions in the electrolytic solution to be 0.4 mol/L or less, is more preferable to be 0.3 mol/L or less, and is further preferable to be 0.2 mol/L or less, based on the total amount of the electrolytic solution, from the viewpoint that charging performance after the dark current discharge and the initial charging performance further improve. It is preferable for the concentration of the cesium ions in the electrolytic solution to be 0.005 to 0.4 mol/L, is more preferable to be 0.01 to 0.3 mol/L, and is further preferable to be 0.04 to 0.2 mol/L, based on the total amount of the electrolytic solution, from the viewpoint that charging performance after the dark current discharge and the initial charging performance further improve.

In the case where the electrolytic solution contains the phosphate ions, it is preferable for the concentration of the phosphate ions in the electrolytic solution to be 0.005 mol/L or more, is more preferable to be 0.01 mol/L or more, and is further preferable to be 0.03 mol/L or more, based on the total amount of the electrolytic solution, from the viewpoint that charging performance after the dark current discharge and the initial charging performance further improve. The above described concentration of the phosphate ions may be 0.04 mol/L or more. It is preferable for the concentration of the phosphate ions in the electrolytic solution to be 0.2 mol/L or less, is more preferable to be 0.1 mol/L or less, and is further preferable to be 0.08 mol/L or less, based on the total amount of the electrolytic solution, from the viewpoint that charging performance after the dark current discharge and the initial charging performance further improve. The above described concentration of the phosphate ions may be 0.07 mol/L or less. It is preferable for the concentration of the phosphate ions in the electrolytic solution to be 0.005 to 0.2 mol/L, is more preferable to be 0.01 to 0.1 mol/L, and is further preferable to be 0.03 to 0.08 mol/L, based on the total amount of the electrolytic solution, from the viewpoint that charging performance after the dark current discharge and the initial charging performance further improve. The above described concentration of the phosphate ions may be 0.04 to 0.07 mol/L.

The concentrations of the potassium ions, the aluminum ions, the cesium ions and the phosphate ions can also be measured, for instance, by ICP emission spectroscopy (high frequency induction coupled plasma emission spectroscopy).

### <Method for manufacturing lead storage battery>

The method for manufacturing the lead storage battery according to the present embodiment includes, for instance: an electrode manufacturing step of obtaining electrodes (positive electrode and negative electrode); and an assembly step of assembling components containing the above described electrodes to obtain a lead storage battery.

In the electrode manufacturing step, for instance, the unformed electrode is obtained by: filling the current collector (for instance, cast grid body obtained according to casting method and expanded grid body obtained according to expanding method) with a paste of an electrode material (paste of positive electrode material and paste of negative electrode material); and then aging and drying the resultant current collector. The positive electrode material paste contains, for instance, a raw material (lead powder and the like) of the positive electrode active material, and may further contain another additive. The negative electrode material paste contains a raw material (lead powder and the like) of the negative electrode active material; it is preferable that the paste contains a resin (bisphenol-based resin and the like) having a sulfone group and/or a sulfonate group, as a dispersion agent. The paste may further contain another additive.

The positive electrode material paste can be obtained, for instance, according to the following method. Firstly, the additive (short fiber for reinforcement and the like) and water are added to the raw material of the positive electrode active material. Next, dilute sulfuric acid is added thereto, then the mixture is kneaded, and the positive electrode material paste is obtained. When the positive electrode material paste is prepared, red lead (Pb₃O₄) may be used as the raw material of the positive electrode active material, from the viewpoint of enabling a reduction of the formation time. The unformed positive electrode can be obtained by filling the current collector with the positive electrode material paste, and then aging and drying the resultant current collector.

In the case where the short fiber for reinforcement is used in the positive electrode material paste, it is preferable for the amount of the short fiber for reinforcement to be blended to be 0.005 to 0.3 mass%, and is more preferable to be 0.05 to 0.3 mass%, based on the total mass of the raw material (lead powder and the like) of the positive electrode active material.

Conditions of an atmosphere of a temperature of 35 to 85°C and a relative humidity of 50 to 98 RH% for 15 to 60 hours are preferable as aging conditions for obtaining the unformed positive electrode. Conditions of a temperature of 45 to 80°C for 15 to 30 hours is preferable as drying conditions.

The negative electrode material paste can be obtained, for instance, according to the following method. Firstly, a mixture is obtained by adding additives (resin having sulfone group and/or sulfonate group, carbon material, short fiber for reinforcement, barium sulfate, and the like) to the raw material of the negative electrode active material, and dry mixing the substances. Then, the negative electrode material paste is obtained by adding dilute sulfuric acid and a solvent (water such as ion-exchanged water, organic solvent, and the like) to this mixture, and kneading the resultant mixture. The unformed negative electrode can be obtained by filling the current collector with the negative electrode paste, and then aging and drying the resultant current collector.

In the case where the resin having the sulfone group and/or the sulfonate group (bisphenol-based resin and the like), the carbon material, the short fiber for reinforcement or the barium sulfate is used in the negative electrode material paste, it is preferable that the amount of each component to be blended is in the following range. It is preferable for the amount of the resin having the sulfone group and/or the sulfonate group to be blended to be 0.01 to 2.0 mass%, is more preferable to be 0.05 to 1.0 mass%, is further preferable to be 0.1 to 0.5 mass%, and is particularly preferable to be 0.1 to 0.3 mass% in terms of the solid content of the resin, based on the total mass of the raw material (lead powder and the like) of the negative electrode active material. It is preferable that the amount of the short fiber for reinforcement to be blended is 0.05 to 0.3 mass%, based on the total mass of the raw material (lead powder and the like) of the negative electrode active material. It is preferable for the amount of barium sulfate to be blended to be 0.01 to 2.0 mass%, and is more preferable to be 0.3 to 2.0 mass%, based on the total mass of the raw material (lead powder and the like) of the negative electrode active material.

It is preferable for the amount of the carbon material to be blended to be 0.05 mass% or more, is more preferable to be 0.1 mass% or more, is further preferable to be 0.15 mass%, and is particularly preferable to be 0.2 mass% or more, based on the total mass of the raw material (lead powder and the like) of the negative electrode active material, from the viewpoint that the charging performance after the dark current discharge and the initial charging performance further improve. It is preferable for the amount of the carbon material to be blended to be 3 mass% or less, is more preferable to be 1.4 mass% or less, is further preferable to be 0.5 mass% or less, is particularly preferable to be 0.4 mass% or less, and is extremely preferable to be 0.3 mass% or less, based on the total mass of the raw material (lead powder and the like) of the negative electrode active material, from the viewpoint that the charging performance after the dark current discharge and the initial charging performance further improve. From these viewpoints, it is preferable for the amount of the carbon material to be blended to be 0.05 to 3 mass%, is more preferable to be 0.1 to 3 mass%, is further preferable to be 0.15 to 3 mass%, is particularly preferable to be 0.2 to 1.4 mass%, is extremely preferable to be 0.2 to 0.5 mass%, is very preferable to be 0.2 to 0.4 mass%, and is still further preferable to be 0.2 to 0.3 mass%, based on the total mass of the raw material (lead powder and the like) of the negative electrode active material.

Conditions of an atmosphere of a temperature of 45 to 65°C and a relative humidity of 70 to 98 RH% for 15 to 30 hours are preferable as aging conditions for obtaining the unformed negative electrode. Conditions of a temperature of 45 to 60°C for 15 to 30 hours are preferable as drying conditions.

In the assembling step, for instance, the unformed negative electrode and the unformed positive electrode that have been produced as described above are alternately stacked in layers through a separator, and current collecting portions of the electrodes that have the same polarity are connected (welded or the like) to each other by a strap to obtain an electrode group. This electrode group is arranged in a battery case to produce an unformed battery. Next, the electrolytic solution is poured into the unformed battery, and then a direct current is passed through the unformed battery to perform formation in the battery case. The lead storage battery is obtained by adjusting the specific gravity of the electrolytic solution after the formation, to an appropriate specific gravity.

The above described electrolytic solution contains, for instance, dilute sulfuric acid and at least one selected from the group consisting of the potassium ion, the aluminum ion, the cesium ion and the phosphate ion. The electrolytic solution may further contain ions (sodium ion, lithium ion, titanium ion and the like) except the potassium ion, the aluminum ion, the cesium ion and the phosphate ion.

The electrolytic solution according to the present embodiment can be prepared by, for instance, dissolving an ion source containing at least one selected from the group consisting of the potassium ion, the aluminum ion, the cesium ion and the phosphate ion, into the dilute sulfuric acid so as to obtain the predetermined ion concentration. The ion source is not limited in particular as long as the ion source is, for instance, a chemical compound soluble in the dilute sulfuric acid. Examples of ion sources of the potassium ion, the aluminum ion and the cesium ion include salts (crystalline salt and the like), hydroxides, oxides and metals. Examples of the salts include sulfates, sulfites, carbonates, hydrogencarbonates, phosphates, borates, and metal acid salts. Examples of the ion source of the phosphate ion include phosphoric acid and phosphates of metal ions. As the phosphoric acid, a commercially available phosphoric acid can be used. An electrolytic solution containing the potassium ion and the phosphate ion can be obtained by adding a crystalline salt of potassium phosphate to the dilute sulfuric acid. The ion source may be an anhydride or may also be a hydrate.

Incidentally, the electrolytic solution to be poured into the battery case may be an electrolytic solution containing at least one selected from the group consisting of the potassium ion, the aluminum ion, the cesium ion and the phosphate ion, or may be an electrolytic solution containing no potassium ion, aluminum ion, cesium ion and phosphate ion. In the case where the electrolytic solution to be poured does not contain the potassium ion, the aluminum ion, the cesium ion and the phosphate ion, examples of a method for making the electrolytic solution contain these ions include: a method of adding the above described ion source to an electrode material to liquate ions into the electrolytic solution; a method of setting the above described ion source on a place which comes in contact with the electrolytic solution in the battery case to liquate the ions into the electrolytic solution.

It is preferable that the specific gravity of the electrolytic solution after the formation is within the following range. It is preferable for the specific gravity of the electrolytic solution to be 1.25 or larger, is more preferable to be 1.26 or larger, is further preferable to be 1.27 or larger, and is particularly preferable to be 1.28 or larger, from the viewpoint of suppressing a permeation short circuit or freeze and being further excellent in discharge characteristics. It is preferable for the specific gravity of the electrolytic solution to be 1.33 or smaller, is more preferable to be 1.32 or smaller, is further preferable to be 1.31 or smaller, is particularly preferable to be 1.30 or smaller, and is extremely preferable to be 1.29 or smaller, from the viewpoint that the charging performance after the dark current discharge, the initial charging performance, and the cycle characteristics further improve. The value of the specific gravity of the electrolytic solution can be measured, for instance, with a floating type specific gravity meter or a digital specific gravity meter made by Kyoto Electronics Manufacturing Co., Ltd.

The battery case is a member which can accommodate electrodes (polar plates and the like) in its inside. It is preferable that the battery case has a box body of which the upper face is opened, and a lid body which covers the upper face of the box body, from the viewpoint of easily accommodating the electrode therein. Incidentally, an adhesive, thermal welding, laser welding, ultrasonic welding and the like can be appropriately used in bonding of the box body to the lid body. The shape of the battery case is not limited in particular, but a rectangular shape is preferable so that the ineffective space becomes small when the electrode (polar plate that is plate-shaped body, and the like) is accommodated in the battery case.

The material of the battery case is not limited in particular, but needs to be resistant to the electrolytic solution (diluted sulfuric acid and the like). Specific examples of the material of the battery case include PP (polypropylene), PE (polyethylene) and an ABS resin. When the material is PP, the battery case is advantageous in terms of acid resistance, workability and economical efficiency. The PP is advantageous in terms of the workability, as compared with the ABS resin in which case heat welding between the lid and the battery case is difficult.

When the battery case is formed of the box body and the lid body, the materials of the box body and the lid body may be the same material as each other, or may be different materials from each other. It is preferable for the materials of the box body and the lid body to be a material having the same coefficient of thermal expansion, from the viewpoint that a too large stress does not occur.

### (Separator)

Examples of the separator include a microporous polyethylene sheet; and a nonwoven fabric that is made of glass fiber and a synthetic resin.

The separator is a member that blocks electric connection between the positive electrode and the negative electrode, and permeates sulfate ions of the electrolytic solution therethrough. It is preferable for the separator to contain polyolefins and silica, and is more preferable to be formed of a material which contains polyolefins and silica as main components (where content (total content) of polyolefins and silica is, for instance, 50 mass% or more on base of total mass of separator), from the viewpoint that the separator is excellent in an effect of suppressing the short circuit. As for the polyolefins, for instance, homopolymers or copolymers of ethylene, propylene, butene, methylpentene and the like, or a mixture thereof can be used. Examples of the above described homopolymer include polyethylene, polypropylene, polybutene, and polymethylpentene. Among the homopolymers, the polyethylene is preferable, from the viewpoint of being excellent in formability and economical efficiency. The polyethylene has a lower melt molding temperature than that of the polypropylene, and shows better productivity.

The weight average molecular weight of the polyolefin is preferably 500000 or more, and is more preferably 1000000 or more, from the viewpoint of being excellent in a mechanical strength of the separator. The upper limit of the weight average molecular weight is not limited in particular, but 5000000 or less is preferable, from the viewpoint of practical use. Incidentally, the weight average molecular weight of the polyolefin can be measured, for instance, by a high temperature GPC apparatus and with the use of toluene or xylene as an eluent.

In the present embodiment, it is preferable that a silica particle is used as silica. It is preferable for the silica particle to be the particle of which the particle size is small and which has a pore structure in the inside and on the surface. It is preferable that the specific surface area of the silica particle is 100 m²/g or larger. When the specific surface area is 100 m²/g or larger, the separator has the pore structure further refined (densified) and complicated to further enhance the short circuit resistance and enhance a retentive power for the electrolytic solution; and a large number of hydrophilic groups (-OH and the like) are provided on the surface of the powder body to thereby be capable of further enhancing the hydrophilicity of the separator. In addition, it is preferable that the specific surface area of the silica particle is 400 m²/g or smaller, from the viewpoint that the silica particles can be uniformly dispersed in the separator. From these viewpoints, it is preferable that the specific surface area of the silica particle is 100 to 400 m²/g. The specific surface area of the silica particle can be measured, for instance, according to the BET method.

It is preferable for the number of the silica particles having a particle size (longest size) of 2 µm or larger in the separator to be 20 pieces or less in a range of 30 µm × 40 µm which has been arbitrarily selected when the cross section of the separator is analyzed by a scanning electron microscope (SEM), and is more preferable to be 10 pieces or less, from the viewpoint of being excellent in the uniformity of the separator strength.

In the element analysis by energy dispersive X-ray spectrometry (EDX), it is preferable that the total of the masses of oxygen and silicon (silicon) in the separator is in the following ranges, based on the total of the masses of carbon, oxygen and silicon in the separator, from the viewpoint of being further excellent in an effect of suppressing the short circuit and the viewpoint of enhancing the separator strength. It is preferable for the above described total of the masses of the oxygen and the silicon to be 30 mass% or more, is more preferable to be 40 mass% or more, and is further preferable to be 50 mass% or more. The above described total of the masses of the oxygen and the silicon may be 55% mass% or more, and may also be 60 mass% or more. It is preferable for the above described total of the masses of the oxygen and the silicon to be 80 mass% or less, is more preferable to be 75 mass% or less, and is further preferable to be 70 mass% or less. The above described total of the masses of the oxygen and the silicon may be 65 mass% or less. It is preferable for the above described total of the masses of the oxygen and the silicon to be 30 to 80 mass%, is more preferable to be 40 to 75 mass%, and is further preferable to be 50 to 70 mass%. The above described total of the masses of the oxygen and the silicon may be 55 to 75 mass%, and may be 60 to 65 mass%.

The masses of the carbon, the oxygen and the silicon in the separator can be determined, for instance, by analyzing the cross section of the separator by energy dispersive X-ray spectrometry (EDX). Specifically, it is preferable that the total of the masses of the oxygen and the silicon is in the above described range, based on the total of the masses of the carbon, the oxygen and the silicon which are detected when the cross section of the separator is analyzed by the EDX.

The separator of the present embodiment can be obtained, for instance, by melt-kneading a raw material composition that contains polyolefins, silica and a plasticizer as main components, and forming the resultant raw material composition into a sheet-like article having a predetermined shape.

The separator may contain an additive such as a surface active agent (hydrophilizing agent), an antioxidant, an ultraviolet absorbing agent, a weather-proof agent, a lubricant, an antibacterial agent, a mildewproofing agent, a pigment, a dye, a coloring agent, an antifogging agent, and a matting agent, in addition to the raw material composition, as needed, in such a range as not to impair the object and the effect of the present invention.

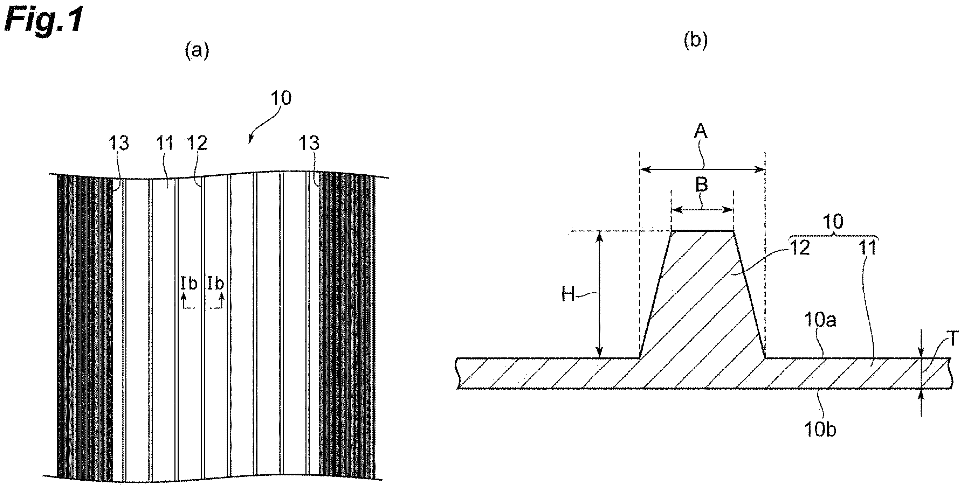

It is preferable that the separator has a convex rib and a base portion which supports the rib. One embodiment of the separator of the present embodiment will be described below with reference to Figures 1 to 3.

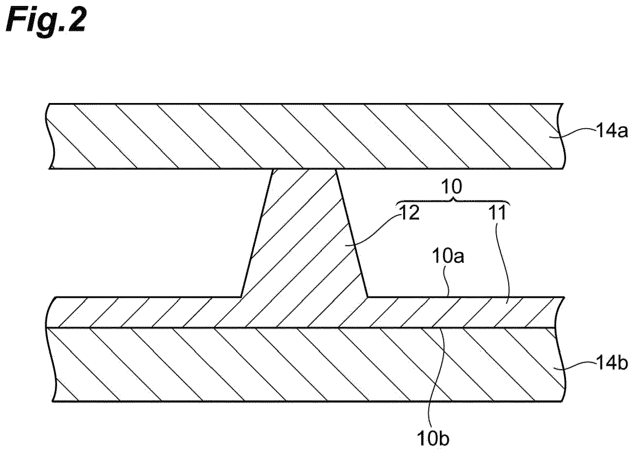

Figure 1(a) is a front view showing a separator; and Figure 1(b) is a cross-sectional view of the separator. Figure 2 is a cross-sectional view of the separator and electrodes. As shown in Figure 1, the separator 10 has a flat base portion 11, a plurality of convex ribs 12, and mini ribs 13. The base portion 11 supports the ribs 12 and the mini ribs 13. The plurality (large number) of ribs 12 are formed in the middle in the width direction of the separator 10, in such a way as to extend in the longitudinal direction of the separator 10. The plurality of ribs 12 are arranged in such a way as to be approximately parallel to each other on one surface 10a of the separator 10. The interval between the ribs 12 is, for instance, 3 to 15 mm. One end in a height direction of the rib 12 is integrated with the base portion 11, and the other end in the height direction of the rib 12 comes in contact with one electrode 14a out of the positive electrode and the negative electrode (see Figure 2). The base portion 11 faces the electrode 14a in the height direction of the rib 12. The rib is not arranged on the other surface 10b of the separator 10, and the other surface 10b of the separator 10 faces or comes in contact with the other electrode 14b (see Figure 2) out of the positive electrode and the negative electrode.

A plurality (large number) of mini ribs 13 are formed on both sides in the width direction of the separator 10 in such a way as to extend in the longitudinal direction of the separator 10. The mini rib 13 has a function of enhancing the separator strength in order to prevent a corner of the electrode from breaking through the separator and causing a short circuit, when the lead storage battery vibrates in a transverse direction. Incidentally, it is preferable that any of the height, the width and the interval of the mini ribs 13 is smaller than corresponding those of the ribs 12. In addition, the cross-sectional shape of the mini rib 13 may be the same as or may also be different from that of the rib 12. It is preferable that the cross-sectional shape of the mini rib 13 is semicircular. In addition, the mini rib 13 does not need to be formed in the separator 10.

It is preferable for the upper limit of the thickness T of the base portion 11 to be 0.4 mm or smaller, is more preferable to be 0.3 mm or smaller, and is further preferable to be 0.25 mm or smaller, from the viewpoint of obtaining more excellent charge acceptability and discharge characteristics. The lower limit of the thickness T of the base portion 11 is not limited in particular, but it is preferable to be 0.05 mm or larger and is more preferable to be 0.1 mm or larger, from the viewpoint of being further excellent in an effect for suppressing the short circuit.

It is preferable for the upper limit of the height H (height in direction in which base portion 11 faces electrode 14) of the rib 12 to be 1 mm or smaller, is more preferable to be 0.8 mm or smaller, and is further preferable to be 0.6 mm or smaller, from the viewpoint that the lead storage battery obtains further excellent charge acceptability. It is preferable for the lower limit of the height H of the rib 12 to be 0.3 mm or larger, is more preferable to be 0.4 mm or larger, and is further preferable to be 0.5 mm or larger, from the viewpoint of suppressing the oxidative deterioration of the positive electrode.

It is preferable for the lower limit of the ratio of the height H of the rib 12 to the thickness T of the base portion 11 (H/T) to be 2 or larger, from the viewpoint of being excellent in oxidation resistance. When the ratio H/T is 2 or larger, it is assumed that the oxidation resistance of the separator improves, because the lead storage battery can sufficiently secure a portion which does not come in contact with an electrode (for instance, positive electrode).

It is preferable for the lower limit of the ratio H/T to be 2.3 or more, and is further preferable to be 2.5 or more, from the viewpoint of being excellent in the oxidation resistance and productivity. It is preferable for the upper limit of the ratio H/T to be 6 or less, from the viewpoint of being excellent in shape retainability of the rib and being further excellent in an effect of suppressing the short circuit. When the ratio H/T is 6 or less, it is assumed that the short circuit is further suppressed, because a distance between the positive electrode and the negative electrode is sufficient. In addition, when the ratio H/T is 6 or less, it is assumed that the rib is not damaged when the lead storage battery is assembled, and the battery characteristics such as charge acceptability are adequately maintained. It is more preferable for the upper limit of the ratio H/T to be 5 or less, is further preferable to be 4 or less, and is particularly preferable to be 3 or less, from the viewpoint of being further excellent in the effect for suppressing the short circuit and being excellent in the shape retainability of the rib.

In addition, it is preferable for the upper bottom width B of the rib 12 (see Figure 1 (b)) to be 0.1 to 2 mm, is more preferable to be 0.2 to 1 mm, and is further preferable to be 0.2 to 0.8 mm, from the viewpoint of being excellent in shape retainability and oxidation resistance of the rib. It is preferable for the lower bottom width A of the rib to be 0.2 to 4 mm, is more preferable to be 0.3 to 2 mm, and is further preferable to be 0.4 to 1 mm, from the viewpoint that the rib is excellent in the shape retainability. It is preferable for a ratio (B/A) of the upper bottom width B to the lower bottom width A to be 0.1 to 1, is more preferable to be 0.2 to 0.8, and is further preferable to be 0.3 to 0.6, from the viewpoint that the rib is excellent in the shape retainability.

It is preferable that the above described separator 10 has such a bag shape as to wrap at least one electrode of the positive electrode and the negative electrode. For instance, such an embodiment is preferable that one of the positive electrode and the negative electrode is accommodated in the bag-like separator, and is alternately layered on the other out of the positive electrode and the negative electrode. When the bag-like separator is applied to the positive electrode, for instance, there is a possibility that the positive electrode penetrates the separator by the extension of the positive electrode current collector; and accordingly it is preferable that the negative electrode is accommodated in the bag-like separator.

A microporous polyethylene sheet can be used for the separator 10. In addition, usable materials for the separator 10 include the microporous polyethylene sheet; and a laminate of glass fibers and an acid resistant paper. It is preferable that the separator is cut so as to match the length of the negative electrode (negative electrode plate or the like), in the step of stacking the electrodes (polar plates and the like) in layers. In addition, the above described cut separator 10 may have such a form that the separator 10 is folded into two, and after both sides have been crimped, thereby wraps the negative electrode,

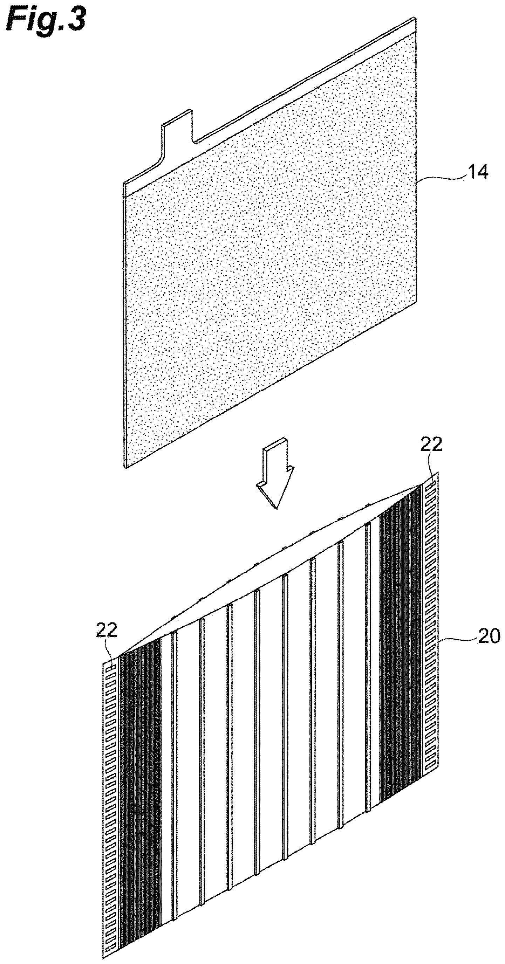

Figure 3 is a view showing a bag-like separator 20 and an electrode (for instance, negative electrode) 14 to be accommodated in the separator 20. As shown in Figure 1(a), the separator 10 which is used in the production of the separator 20 is formed, for instance, in such a shape as a long sheet. The separator 20 shown in Figure 3 is obtained by cutting the separator 10 to an appropriate length, folding the separator into two in the longitudinal direction of the separator 10, arranging the electrode 14 in the inside, overlapping the separator 10, and mechanically sealing, crimping or thermally bonding both of the side portions (for instance, reference numeral 22 in Figure 3 indicates mechanically sealed portion).

In the case where the electrolytic solution of the lead storage battery according to the present embodiment contains the aluminum ions, an excellent effect of suppressing the short circuit is obtained even when the separator containing silica is used. The reason why the short circuit tends to occur when the separator containing the silica is used and the reason why the electrolytic solution containing the aluminum ions can thereby suppress the occurrence of the short circuit are not clear, but the present inventors will assume the reasons as in the following way.

First, when the discharge reaction occurs, the positive electrode side tends to form an alkaline atmosphere, and in the case where the aluminum ions do not exist in the electrolytic solution, the silica becomes easy to dissolve in the electrolytic solution when the positive electrode side becomes alkaline. If the silica dissolves in the electrolytic solution, it is assumed that the separator shrinks, the thickness of the separator decreases, and accordingly the short circuit tends to occur. It is also assumed that the solubility of lead sulfate increases in the positive electrode when the pH increases (when pH shifts to alkali side) because of the consumption of hydrogen ions due to the discharge reaction on the positive electrode, and the precipitation of the lead sulfate tends to occur in the inside of the separator because of a difference between said solubility and a solubility of the lead sulfate at the time when the pH lowers (when pH shifts to acidic side) at the time of charging, and the short circuit accelerates.

On the other hand, when the electrolytic solution of the lead storage battery according to the present embodiment contains the aluminum ions, an aluminum compound such as aluminum hydroxide precipitates inside the separator at the time of discharge. As in the above manner, the aluminum compound such as aluminum hydroxide precipitates, and thereby the dissolution of silica is suppressed, which accordingly can keep the thickness of the separator. In addition, the precipitation reaction of the aluminum compound such as the aluminum hydroxide can alleviate an increase of the pH of the electrolytic solution (a shift of pH to alkali side), and accordingly can suppress also the increase of the solubility of the lead sulfate. It is assumed that for these reasons, the existence of the aluminum ions in the electrolytic solution can suppress the short circuit.

The conditions of the formation and the specific gravity of the dilute sulfuric acid can be adjusted according to the properties of the electrode active material. In addition, the formation treatment is not limited to being carried out after the assembly step, but may be carried out after aging and drying in the electrode manufacturing process (tank formation).

### Examples

The present invention will be specifically described below with reference to examples. However, the present invention is not limited to only the following examples.

### <Preparation of bisphenol-based resin>

Into a separable flask that is provided with Dimroth, a mechanical stirrer and a thermometer, 42 parts by mass (1.05 mol) of sodium hydroxide and 792.6 parts by mass (44 mol) of ion-exchanged water were added, then the mixture was stirred at 150 rpm (= min⁻¹) for 5 minutes, and thereby an aqueous solution of sodium hydroxide was prepared. Into the aqueous solution of the sodium hydroxide, 173.2 parts by mass (1.0 mol) of 4-aminobenzenesulfonic acid was added, then the resultant solution was stirred at 25°C for 30 minutes, and a homogeneous solution A was obtained. Into the solution A, 90.9 parts by mass of paraformaldehyde (3.0 mol in terms of formaldehyde, made by Mitsui Chemicals, Inc.) was added, then the resultant solution was stirred for 5 minutes to dissolve paraformaldehyde therein, and a homogeneous solution B was obtained. Subsequently, into the solution B, 219.2 parts by mass (0.96 mol) of bisphenol A and 10.4 parts by mass (0.04 mol) of bisphenol S were added, then the mixture was stirred for 10 hours while being heated in an oil bath set at 90°C, and a solution C was obtained.

The pH of the solution at the time immediately after the bisphenol A and the bisphenol S have been added (at the start of reaction) was measured under the following measurement conditions. The pH was 8.6.

### {Conditions of pH measurement}

Testing machine: TwinpH (made by AS ONE Corporation)
Calibration solution: pH 6.86 (25°C), and pH 4.01 (25°C)
Measurement temperature: 25°C
Measurement procedure: Two-point calibration was performed by using the calibration solutions. A sensor portion of the testing machine was washed, then the solution to be measured was sucked up with a dropping pipet, and 0.1 to 0.3 mL was added dropwise to the sensor portion. The pH at the time when an indication of the end of measurement appeared on the screen was determined to be a measured value.

The solution C which was prepared in the above description was transferred to a heat-resistant container. The heat-resistant container containing the solution C was charged into a vacuum dryer which was set at 60°C, and then a resin powder (condensate of bisphenol/aminobenzenesulfonic acid/formaldehyde) was obtained by drying the solution in a reduced pressure state of 1 kPa or lower for 10 hours. The weight average molecular weight of the resin powder was measured with GPC under the following conditions. The weight average molecular weight was 53900.

### {GPC measurement condition}

Apparatus: high-speed liquid chromatograph LC-2200 Plus (made by JASCO Corporation)
Pump: PU-2080
Differential refractometer: RI-2031
Detector: Ultraviolet visible absorptiometer UV-2075 (λ: 254 nm)
Column oven: CO-2065
Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/min
Molecular weight standard sample: polyethylene glycol (molecular weight: 1.10 × 10⁶, 5.80 × 10⁵, 2.55 × 10⁵, 1.46 × 10⁵, 1.01 × 10⁵, 4.49 × 10⁴, 2.70 × 10⁴ and 2.10 × 10⁴; made by Tosoh Corporation), Diethylene glycol (molecular weight: 1.06 × 10²; made by KISHIDA CHEMICAL Co., Ltd.), and dibutylhydroxytoluene (molecular weight: 2.20 × 10²; made by KISHIDA CHEMICAL Co., Ltd.)

### <Production of lead storage battery>

### (Experimental example 1)

### [Production of positive electrode plate]

Lead powder and red lead (Pb₃O₄) were used as raw materials of the positive electrode active material (lead powder: red lead = 96 : 4 (mass ratio)). The raw materials of the positive electrode active material, 0.07 mass% (base: total mass of raw materials of positive electrode active material) of the short fiber for reinforcement (acrylic fiber) and water were mixed and kneaded. Subsequently, the mixture was kneaded while dilute sulfuric acid (specific gravity of 1.280) was added little by little, and a paste of a positive electrode material was produced. An expanded grid body which was produced by subjecting a rolled sheet made from a lead alloy to expand process was filled with the positive electrode material paste. Subsequently, the positive electrode material paste was aged in an atmosphere of a temperature of 50°C and a humidity of 98% for 24 hours. After that, the aged paste was dried, and an unformed positive electrode plate was produced.

### [Production of negative electrode plate]

Lead powder was used as a raw material of the negative electrode active material. A mixture, which contained 0.2 mass% (in terms of solid content) of the bisphenol-based resin that was obtained in the above description, 0.1 mass% of a short fiber for reinforcement (acrylic fiber), 1.0 mass% of barium sulfate, and 0.2 mass% of furnace black (average particle size: approximately 30 nm), was added to the above described lead powder; and then the resultant mixture was dry-mixed (the blended amount is blended amount on base of total mass of raw materials of negative electrode active material). Next, water was added to the mixture and then the resultant mixture was kneaded. Subsequently, the mixture was kneaded while dilute sulfuric acid (specific gravity of 1.260) was added little by little, and a paste of a negative electrode material was produced. An expanded grid body which was produced by subjecting a rolled sheet made from a lead alloy to expand process was filled with the negative electrode material paste. Subsequently, the negative electrode material paste was aged in an atmosphere of a temperature of 50°C and a humidity of 98% for 24 hours. After that, the aged paste was dried, and an unformed negative electrode plate was produced.

### [Preparation of electrolytic solution]

An aqueous solution of aluminum sulfate and an aqueous solution of phosphoric acid were added to dilute sulfuric acid so that an aluminum ion concentration and a phosphate ion concentration in the electrolytic solution became concentrations shown in Table 1, and an electrolytic solution was prepared.

### [Preparation of separator]

A separator (bag-like separator) was prepared by processing the sheet-like article which contained polyethylene and silica particles and had a plurality of linear ribs formed on one surface, into a bag shape so that the surface having the ribs formed thereon came to the outside (see Figure 1 and Figure 3). The details of the separator are shown below.
/Total thickness: 0.75 mm (thickness T of base portion: 0.2 mm, height H of rib: 0.55 mm, and H/T = 2.75)
/Interval of rib: 7.35 mm, upper bottom width B of rib: 0.4 mm, and lower bottom width A of rib: 0.8 mm
/Silica particles: The number of silica particles having a particle size (longest size) of 2 µm or larger was 9 pieces in a range of 30 µm × 40 µm which was arbitrarily selected when the cross section of the separator was analyzed by a scanning electron microscope (SEM).

### [Assembly of battery]

First, the unformed negative electrode plate was accommodated in the above described bag-like separator. Subsequently, six unformed positive electrode plates and seven unformed negative electrode plates which were accommodated in the above described bag-like separator were alternately stacked in layers, then ear portions of the polar plates having the same polarity were welded to each other by a cast-on strap (COS) method, and the polar plate group was produced. The above described polar plate group was inserted into the battery case, and a single cell battery of 2 V (which corresponds to single cell of B 19 size specified in JIS D 5301) was assembled. The electrolytic solution which was prepared in the above description (specific gravity of 1.28) was poured into this battery, then the electrodes sere unformed by a passing current of 17.5 A in a water bath of 40°C for 16 hours, and a lead storage battery was obtained. The specific gravity of the electrolytic solution after the formation was adjusted to be 1.28. Incidentally, the specific gravities in the following experimental examples 2 to 35 were also adjusted to the similar specific gravity. The content of the Furnace black (average particle size: approximately 30 nm) with respect to the total mass of the negative electrode material after the formation was 0.2 mass%.

### [Total amount of oxygen and silicon in separator]

First, the separator of the time before the battery was assembled was cut by an ion-milling apparatus E-3500 (trade name, made by Hitachi High-Technologies Corporation), and the cross section of the separator was exposed. Next, the cross section of the separator was subjected to an EDX analysis by using a scanning electron microscope (trade name: JSM-6010LA, made by JEOL Ltd.). Mapping analysis was carried out at a magnification of 300 times; after the measurement, a separator portion was selected, and amounts of existence of the carbon, the oxygen and the silicon were quantified; and the amounts were converted into the masses of the respective elements. The total amount (mass%) of the masses of oxygen and silicon in the separator was calculated based on the total mass of the obtained carbon, oxygen and silicon. Incidentally, the conditions of the mapping analysis were set in such a way that the acceleration voltage was 15 kV, the spot size was 72, the pressure in the low vacuum mode was 35 Pa, the dwell time was 1 millisecond, the process time was T4, the number of pixels was 512x384, and the number of integration was 5 times. As for a result of the quantitative analysis for each of the elements, the carbon was 40 (mass%), the oxygen was 38 (mass%) and the silicon was 22 (mass%), based on the total of the masses of the carbon, the oxygen and the silicon.

### [Measurement of specific surface area]

A measurement sample of the specific surface area was prepared according to the following procedure. First, the formed battery was disassembled, the electrode plates (positive electrode plate and negative electrode plate) were taken out, were washed with water, and then were dried at 50°C for 24 hours. Next, 2 g of each of the electrode materials (positive electrode material and negative electrode material) was collected from the center portion of the above described electrode plate, and was dried at 130°C for 30 minutes; and the measurement samples were produced.

While the measurement sample which was prepared in the above description was cooled with liquid nitrogen, the amount of adsorbed nitrogen gas was measured at a liquid nitrogen temperature according to a multipoint method, and the specific surface areas of the positive electrode material and the negative electrode material after the formation were calculated according to the BET method. The measurement conditions were as follows. As a result of having measured the measurement samples in this manner, the specific surface area of the positive electrode material was 6 m²/g and the specific surface area of the negative electrode material was 0.7 m²/g. Incidentally, the following experimental examples 2 to 35 provided similar specific surface areas.

### {Measurement condition of specific surface area}

Apparatus: Macsorb 1201 (made by Mountech Co., Ltd.)
Deaeration time: 10 minutes at 130°C
Cooling: by liquid nitrogen for 5 minutes
Flow rate of adsorption gas: 25 mL/min

### (Experimental examples 2 and 3)

Lead storage batteries were produced in a similar way to that in Experimental example 1, except that the concentration of the aluminum ions and the concentration of the phosphate ions were adjusted to concentrations shown in Table 1.

### (Experimental examples 4 to 6)

Lead storage batteries were produced in a similar way to that in Experimental example 1, except that the concentration of the aluminum ions was adjusted to concentrations shown in Table 1 and the phosphate ion was not used.

### (Experimental example 7)

A lead storage battery was produced in a similar way to that in Experimental example 1, except that cesium sulfate was used in place of aluminum sulfate, and that the concentration of the cesium ions and the concentration of the phosphate ions were adjusted to concentrations shown in Table 1.

### (Experimental examples 8 and 9)

Lead storage batteries were produced in a similar way to that in Experimental example 7, except that the concentration of the cesium ions and the concentration of the phosphate ions were adjusted to concentrations shown in Table 1.

### (Experimental examples 10 to 13)

Lead storage batteries were produced in a similar way to that in Experimental example 7, except that the concentration of the cesium ions was adjusted to concentrations shown in Table 1 and the phosphate ion was not used.

### (Experimental example 14)

A lead storage battery was produced in a similar way to that in Experimental example 1, except that potassium sulfate was used in place of aluminum sulfate, and that the concentration of the potassium ions and the concentration of the phosphate ions were adjusted to concentrations shown in Table 1.

### (Experimental examples 15 and 16)

Lead storage batteries were produced in a similar way to that in Experimental example 14, except that the concentration of the potassium ions and the concentration of the phosphate ions were adjusted to concentrations shown in Table 1.

### (Experimental examples 17 to 20)

Lead storage batteries were produced in a similar way to that in Experimental example 14, except that the concentration of the potassium ions was adjusted to concentrations shown in Table 1 and the phosphate ion was not used.

### (Experimental examples 21 to 25)

Lead storage batteries were produced in a similar way to that in Experimental example 1, except that the concentration of the phosphate ions was adjusted to concentrations shown in Table 1 and the aluminum ion was not used.

### (Experimental example 26)

A lead storage battery was produced in a similar way to that in Experimental example 1, except that a dilute sulfuric acid was used as the electrolytic solution, which did not contain the potassium ion, the aluminum ion, the cesium ion, the lithium ion, the titanium ion and the phosphate ion, and the Furnace black was not used when the negative electrode plate was produced.

### (Experimental example 27)

A lead storage battery was produced in a similar way to that in Experimental example 1, except that a dilute sulfuric acid was used as the electrolytic solution, which did not contain the potassium ion, the aluminum ion, the cesium ion, the lithium ion, the titanium ion and the phosphate ion.

### (Experimental examples 28 and 29)

Lead storage batteries were produced in a similar way to that in Experimental example 4, except that lithium sulfate was used in place of aluminum sulfate and the concentration of the lithium ions was adjusted to concentrations shown in Table 1.

### (Experimental example 30)

A lead storage battery was produced in a similar way to that in Experimental example 4, except that titanium sulfate was used in place of aluminum sulfate and the concentration of the titanium ions was adjusted to a concentration shown in Table 1.

### (Experimental example 31)

A lead storage battery was produced in a similar way to that in Experimental example 3, except that graphite (average particle size: approximately 500 µm) was used in place of the Furnace black when the negative electrode plate was produced.

### (Experimental example 32)

A lead storage battery was produced in a similar way to that in Experimental example 9, except that graphite (average particle size: approximately 500 µm) was used in place of the Furnace black when the negative electrode plate was produced.

### (Experimental example 33)

A lead storage battery was produced in a similar way to that in Experimental example 12, except that graphite (average particle size: approximately 500 µm) was used in place of the Furnace black when the negative electrode plate was produced.

### (Experimental example 34)

A lead storage battery was produced in a similar way to that in Experimental example 16, except that graphite (average particle size: approximately 500 µm) was used in place of the Furnace black when the negative electrode plate was produced.

### (Experimental example 35)

A lead storage battery was produced in a similar way to that in Experimental example 27, except that graphite (average particle size: approximately 500 µm) was used in place of the Furnace black when the negative electrode plate was produced.

### <Evaluation of battery characteristics>

The initial charging performance and the charging performance after the dark current discharge of the lead storage batteries of Experimental examples 1 to 29 and 31 to 35 were evaluated according to the following methods. In addition, a voltage drop in the dark current discharge state of the lead storage batteries of Experimental examples 1 to 35 was checked according to the following method. Incidentally, as described later, it became clear that the voltage drop of the lead storage battery of Experimental example 30 in the dark current discharge state was remarkably large as compared to that in the lead storage batteries of Experimental examples 1 to 29 and 31 to 35 and was not practical, and accordingly the initial charging performance and the charging performance after the dark current discharge of the lead storage battery of Experimental example 30 were not evaluated.

### (Initial charging performance)

First, the lead storage battery in a fully charged state (SOC = 100%) was discharged at a constant current of a current value of 10.4 A at an ambient temperature of 25°C, and 10% of the battery capacity was discharged from the fully charged state: and thereby the lead storage battery was adjusted to such a state that the charged state (SOC) was 90%. Next, the lead storage battery was charged at a constant voltage of 2.33 V, and the current value I₁ at the time when 5 seconds elapsed from the start of charging was measured. On the assumption that the current value I₁ of Experimental example 27 was 100, the current value I₁ of each of Experimental examples 1 to 26, 28 and 29 was relatively evaluated based on the current value I₁ of Experimental example 27 (see I₁ in Table 1). In addition, on the assumption that the current value I₁ of Experimental example 27 was 100, the current value I₁ of each of Experimental examples 31 to 35 was relatively evaluated based on the current value I₁ of Experimental example 27 (see I₁ in Table 2). Furthermore, on the assumption that the current value I₁ of Experimental example 35 was 100, the current value I₁ of each of Experimental examples 31 to 34 was relatively evaluated based on the current value I₁ of Experimental example 35 (see I₄ in Table 2). Incidentally, as the current value I₁ is larger, it is evaluated for the battery to have better initial charging performance. Evaluation results are shown in Table 1 and Table 2.

### (Charging performance after dark current discharge)

First, the lead storage battery in a fully charged state (SOC = 100%) was discharged at a constant current of a current value of 20 mA at an ambient temperature of 25°C, and 10% of the battery capacity was discharged from the fully charged state; and thereby the lead storage battery was adjusted to such a state that the charged state (SOC) was 90%. Next, the lead storage battery was charged at a constant voltage of 2.33 V, and the current value I₂ at the time when 5 seconds elapsed from the start of charging was measured. On the assumption that the current value I₁ of Experimental example 27 was 100, the current value I₂ of each of Experimental examples 1 to 26, 28 and 29 was relatively evaluated based on the current value I₁ of Experimental example 27 (see I₂ in Table 1). In addition, on the assumption that the current value I₁ of Experimental example 27 was 100, the current value I₂ of each of Experimental examples 31 to 34 was relatively evaluated based on the current value I₁ of Experimental example 27 (see I₂ in Table 2). As the current value I₂ is larger, it is evaluated for the battery to have better charging performance after the dark current discharge. Evaluation results are shown in Table 1 and Table 2.

Incidentally, in Table 1, on the assumption that the current value I₂ of Experimental example 27 was 100, a relative value I₃ for relatively evaluating the current value I₂ of each of Experimental examples 1 to 26, 28 and 29 was shown based on the current value I₂ of Experimental example 27, (relative value I₃ = current value I₂ of each of Experimental examples 1 to 29 / current value I₂ of Experimental example 27 × 100). In addition, in Table 2, on the assumption that the current value I₂ of Experimental example 35 was 100, a relative value I₅ for relatively evaluating the current value I₂ of each of Experimental examples 31 to 34 was shown based on the current value I₂ of Experimental example 35, (relative value I₅ = current value I₂ of each of Experimental examples 31 to 35 / current value I₂ of Experimental example 35 × 100).

### (Check of voltage drop in dark current discharge state)

The lead storage battery in the fully charged state (SOC = 100%) was discharged at a constant current of a current value of 20 mA at an ambient temperature of 25°C, and the voltage drop at the time when the lead storage battery discharged 10% of the battery capacity from the fully charged state was checked. As a result, the voltage drop of each of the lead storage batteries in Experimental examples 1 to 29 and 31 to 35 was sufficiently small (voltage drop of approximately 0.02 V or less), and it was confirmed that the excessive voltage drop was suppressed. On the other hand, the voltage drop of the lead storage battery of Experimental example 30 was remarkably large (voltage drop of approximately 0.08 V) as compared with those of the lead storage batteries of Experimental examples 1 to 29 and 31 to 35, and it became clear that the lead storage battery of Experimental example 30 was not practical.

**[Table 1]**

| | Electrolytic solution | | | | | | Negative electrode | Evaluation result | | |
|---|---|---|---|---|---|---|---|---|---|---|
| | Ion concentration (mol/L) | | | | | | Amount of furnace black to be blended (mass%) | Initial charging performance | Charging performance after dark current discharge | |
| | Aluminum ion | Cesium ion | Potassium ion | Phosphate ion | Lithium ion | Titanium ion | | I₁ | I₂ | I₃ |
| | | | | | | | | based on I₁ of Experimental example 27 | based on I₁ of Experimental example 27 | based on I₂ of Experimental example 27 |
| Experimental example 1 | 0.12 | - | - | 0.005 | - | - | 0.2 | 107 | 58 | 161 |
| Experimental example 2 | 0.12 | - | - | 0.04 | - | - | 0.2 | 113 | 63 | 175 |
| Experimental example 3 | 0.12 | - | - | 0.1 | - | - | 0.2 | 110 | 62 | 172 |
| Experimental example 4 | 0.005 | - | - | - | - | - | 0.2 | 101 | 41 | 114 |
| Experimental example 5 | 0.04 | - | - | - | - | - | 0.2 | 103 | 54 | 150 |
| Experimental example 6 | 0.12 | - | - | - | - | - | 0.2 | 104 | 55 | 153 |
| Experimental example 7 | - | 02 | - | 0.005 | - | - | 0.2 | 107 | 55 | 153 |
| Experimental example 8 | - | 0.2 | - | 0.04 | - | - | 0.2 | 113 | 60 | 167 |
| Experimental example 9 | - | 0.2 | - | 0.1 | - | - | 0.2 | 110 | 59 | 164 |
| Experimental example 10 | - | 0.005 | - | - | - | - | 0.2 | 101 | 40 | 111 |
| Experimental example 11 | - | 0.04 | - | - | - | - | 0.2 | 103 | 42 | 117 |
| Experimental example 12 | - | 0.15 | - | - | - | - | 0.2 | 104 | 57 | 158 |
| Experimental example 13 | - | 0.3 | - | - | - | - | 0.2 | 105 | 47 | 131 |
| Experimental example 14 | - | - | 0.03 | 0.005 | - | - | 0.2 | 117 | 54 | 150 |
| Experimental example 15 | - | - | 0.03 | 0.04 | - | - | 0.2 | 123 | 58 | 161 |
| Experimental example 16 | - | - | 0.03 | 0.1 | - | - | 0.2 | 120 | 58 | 161 |
| Experimental example 17 | - | - | 0.003 | - | - | - | 0.2 | 103 | 40 | 111 |
| Experimental example 18 | - | - | 0.03 | - | - | - | 0.2 | 113 | 50 | 139 |
| Experimental example 19 | - | - | 0.1 | - | - | - | 0.2 | 108 | 49 | 136 |
| Experimental example 20 | - | - | 0.15 | - | - | - | 0.2 | 102 | 45 | 125 |
| Experimental example 21 | - | - | - | 0.005 | - | - | 0.2 | 103 | 40 | 111 |
| Experimental example 22 | - | - | - | 0.04 | - | - | 0.2 | 109 | 44 | 122 |
| Experimental example 23 | - | - | - | 0.07 | - | - | 02 | 111 | 45 | 125 |
| Experimental example 24 | - | - | - | 0.1 | - | - | 0.2 | 106 | 43 | 119 |
| Experimental example 25 | - | - | - | 0.2 | - | - | 0.2 | 101 | 37 | 103 |
| Experimental example 26 | - | - | - | - | - | - | - | 91 | 29 | 81 |
| Experimental example 27 | - | - | - | - | - | - | 0.2 | 100 | 36 | 100 |
| Experimental example 28 | - | - | - | - | 0.1 | - | 0.2 | 98 | 36 | 100 |
| Experimental example 29 | - | - | - | - | 0.3 | - | 0.2 | 96 | 34 | 94 |
| Experimental example 30 | - | - | - | - | - | 0.1 | 0.2 | - | - | - |

**[Table 2]**

| | Electrolytic solution | | | | | | Negative electrode | Evaluation result | | | |
|---|---|---|---|---|---|---|---|---|---|---|---|
| | Ion concentration (mol/L) | | | | | | Amount of graphite to be blended (mass%) | Initial charging performance | | Charging performance after dark current discharge | |
| | Aluminum ion | Cesium ion | Potassium ion | Phosphate ion | Lithium ion | Titanium ion | | I₁ | I₄ | I₂ | I₅ |
| | | | | | | | | based on I_{I} of Experimental example 27 | based on I₁ of Experimental example 35 | based on I₁ of Experimental example 27 | based on I₂ of Experimental example 35 |
| Experimental example 31 | 0.12 | - | - | 0.1 | - | - | 0.2 | 100 | 111 | 42 | 162 |
| Experimental example 32 | - | 0.2 | - | 0.1 | - | - | 0.2 | 100 | 111 | 39 | 150 |
| Experimental example 33 | - | 0.15 | - | - | - | - | 0.2 | 96 | 107 | 36 | 138 |
| Experimental example 34 | - | - | 0.03 | 0.1 | - | - | 0.2 | 110 | 122 | 37 | 142 |
| Experimental example 35 | - | - | - | - | - | - | 0.2 | 90 | 100 | 26 | 100 |

In Experimental example 27, it was confirmed that a very low current value could be obtained after the dark current discharge. In contrast to this, in Experimental examples 1 to 25 which use at least one selected from the group consisting of the potassium ion, the aluminum ion, the cesium ion and the phosphate ion, it was confirmed that a high current value was obtained after the dark current discharge, as compared with that in Experimental example 27. In addition, in Experimental examples 1 to 25, it was confirmed that a high current value could be obtained also in the initial stage as compared with that in Experimental example 27.

In Experimental example 35, it was confirmed that a very low current value could be obtained after the dark current discharge. In contrast to this, in Experimental examples 31 to 34 which use at least one selected from the group consisting of the potassium ion, the aluminum ion, the cesium ion and the phosphate ion, it was confirmed that a higher current value was obtained after the dark current discharge, as compared with that in Experimental example 35. In addition, in Experimental examples 31 to 34, it was confirmed that a high current value could be obtained also in the initial stage as compared with that in Experimental example 35.

When the graphite was changed to Furnace black, the initial charging performance and the charging performance after the dark current discharge further improved. It is considered that because the Furnace black has smaller particle size and a larger specific surface area as compared with the graphite and accordingly can adequately adhere to coarsened lead sulfate, the charging performance improved.

It was confirmed that when the aluminum ion, the cesium ion or the potassium ion was used in combination with the phosphate ion, the initial charging performance and the charging performance after the dark current discharge tended to further easily improve. The reason is considered to be because the anion and the cation differently act at the time of the reaction and do not hinder each other.

### Reference Signs List

10 and 20: separator, 10a: one surface, 10b: other surface, 11: base portion, 12: rib, 13: mini rib, 14, 14a and 14b: electrode, 22: mechanically sealed portion, A: lower bottom width of rib, B: upper bottom width of rib, H: height of rib, T: thickness of base portion

## Claims

1. A lead storage battery comprising a positive electrode, a negative electrode, an electrolytic solution and a separator, wherein
the positive electrode has a positive electrode material containing a positive electrode active material,
the negative electrode has a negative electrode material containing a negative electrode active material, and
the electrolytic solution contains potassium ions.

2. A lead storage battery comprising a positive electrode, a negative electrode, an electrolytic solution and a separator, wherein
the positive electrode has a positive electrode material containing a positive electrode active material,
the negative electrode has a negative electrode material containing a negative electrode active material, and
the electrolytic solution contains aluminum ions.

3. A lead storage battery comprising a positive electrode, a negative electrode, an electrolytic solution and a separator, wherein
the positive electrode has a positive electrode material containing a positive electrode active material,
the negative electrode has a negative electrode material containing a negative electrode active material, and
the electrolytic solution contains cesium ions.

4. The lead storage battery according to claim 1, wherein a concentration of the potassium ions in the electrolytic solution is 0.003 to 0.15 mol/L.

5. The lead storage battery according to claim 2, wherein a concentration of the aluminum ions in the electrolytic solution is 0.005 to 0.4 mol/L.

6. The lead storage battery according to claim 3, wherein a concentration of the cesium ions in the electrolytic solution is 0.005 to 0.4 mol/L.

7. The lead storage battery according to any one of claims 1 to 6, wherein the electrolytic solution further contains phosphate ions.

8. A lead storage battery comprising a positive electrode, a negative electrode, an electrolytic solution and a separator, wherein
the positive electrode has a positive electrode material containing a positive electrode active material,
the negative electrode has a negative electrode material containing a negative electrode active material, and
the electrolytic solution contains phosphate ions.

9. The lead storage battery according to claim 7 or 8, wherein a concentration of the phosphate ions in the electrolytic solution is 0.005 to 0.2 mol/L.

10. The lead storage battery according to any one of claims 1 to 9, wherein the negative electrode material further contains carbon black.

11. The lead storage battery according to any one of claims 1 to 10, wherein the negative electrode material further contains a resin having at least one selected from the group consisting of a sulfone group and a sulfonate group.

12. The lead storage battery according to claim 11, wherein the resin includes at least one selected from the group consisting of: a bisphenol-based resin having at least one selected from the group consisting of a sulfone group and a sulfonate group; lignin sulfonic acid; and a lignin sulfonate.

13. The lead storage battery according to claim 11, wherein the resin includes a bisphenol-based resin having at least one selected from the group consisting of the sulfone group and the sulfonate group.

14. The lead storage battery according to claim 12 or 13, wherein the bisphenol-based resin is a resin derived from a reaction of: a bisphenol-based compound; at least one selected from the group consisting of aminoalkylsulfonic acid, an aminoalkylsulfonic acid derivative, aminoarylsulfonic acid and an aminoarylsulfonic acid derivative; and at least one selected from the group consisting of formaldehyde and a formaldehyde derivative.

15. The lead storage battery according to any one of claims 1 to 14, wherein a specific surface area of the negative electrode material is 0.5 to 2 m²/g.

16. The lead storage battery according to any one of claims 1 to 15, wherein a specific surface area of the positive electrode material is 4 m²/g or larger.

17. The lead storage battery according to any one of claims 1 to 16, wherein the separator contains a polyolefin and silica.

18. The lead storage battery according to any one of claims 1 to 17, wherein a total of masses of oxygen and silicon in the separator is 30 to 80 mass%, based on a total of masses of carbon, oxygen and silicon, in an elemental analysis according to energy dispersive X-ray spectrometry.

19. The lead storage battery according to any one of claims 1 to 18, wherein
the separator has a convex rib and a base portion supporting the rib, and
H/T is 2 or more, the H/T being a ratio of a height H of the rib to a thickness T of the base portion.

20. An automobile provided with the lead storage battery according to any one of claims 1 to 19, wherein
the lead storage battery discharges electricity with a current value of 20 to 100 mA in an engine stopped state.
